# EUROPÄISCHE PATENTSCHRIFT

(11) **EP 1 838 508 B1**
(45) Veröffentlichungstag und Bekanntmachung des Hinweises auf die Patenterteilung: **06.10.2010**
(21) Anmeldenummer: 06700496.0
(22) Anmeldetag: 12.01.2006
(51) Int. Cl.: B29B 9/06

(54) **STRANGFORMBAUTEIL UND VERFAHREN ZUM ANFAHREN DESSELBEN**
STRAND SHAPING PART AND METHOD FOR STARTING THE SAME
UNITE DE FORMATION DE TUBES ET PROCEDE DE DEMARRAGE DE CETTE UNITE

(30) Priorität: 18.01.2005 AT 782005
(43) Veröffentlichungstag der Anmeldung: 03.10.2007
(73) Patentinhaber: EREMA Engineering Recycling Maschinen und Anlagen Gesellschaft m.b.H., 4052 Ansfelden (AT)
(72) Erfinder: BACHER, Helmut, A-4490 St. Florian (AT); SCHULZ, Helmuth, A-4020 Linz (AT); WENDELIN, Georg, A-4033 Linz (AT)
(74) Vertreter: Wildhack & Jellinek
(86) Internationale Anmeldenummer: PCT/AT2006/000013
(87) Internationale Veröffentlichungsnummer: WO 2006/076751

(56) Entgegenhaltungen:
- EP-A- 0 894 594
- DE-A1- 10 117 913
- GB-A- 823 261
- US-A- 5 723 082
- US-A- 6 019 916

## Beschreibung

Die Erfindung bezieht sich auf einen Strangformbauteil zum Anschluss eines Extruders an eine Granulieranlage, vorzugsweise für thermoplastisches Kunststoffmaterial, mit zumindest einem mit dem Extruder in Strömungsverbindung bringbaren Zuführkanal für die Schmelze, der zu einer Zahnradpumpe führt, mit welcher der Schmelzefluss zu einem Kanal, welcher zu einer Strangdüse führt, beim Anfahren des Extruders absperrbar ist.

Weiters bezieht sich die Erfindung auf ein Verfahren zum Anfahren einer mit einem solchen Strangformbauteil versehenen Granulieranlage.

Granulieranlagen bieten den Vorteil, sehr niederviskose Materialien, insbesondere thermoplastische Kunststoffe, granulieren zu können, vorzugsweise zu Recyclingzwecken. Bei einer Unterwassergranulieranlage gelangt die vom Extruder gelieferte Schmelze direkt in das Granulatorgehäuse, welches von Wasser durchströmt ist. Auch die Schneidwerkzeuge, welche an der Lochplatte vorbeistreifen und dabei die aus den die Düsen bildenden Löchern der Lochplatte austretenden Stränge in die Granulatteilchen unterteilen, laufen unter Wasser. Bei einer üblichen Stranggranulieranlage werden hingegen die aus den Strangdüsen austretenden Stränge in ein Wasserbad gelassen, in welchem sich die Schmelze verfestigt, worauf die Stränge wieder aus dem Wasserbad herausgehoben und den Granuliermessern zugeleitet werden.

Um solche Anlagen starten zu können, muss die Schmelze schlagartig den Düsen zugeführt werden, um zu vermeiden, dass einzelne Düsen einfrieren, denn insbesondere bei Unterwassergranulieranlagen, bei welchen die Lochplatte mit Wasser in Berührung steht, kühlt die Schmelze rasch ab. Um die erwähnte schlagartige Zufuhr sicherzustellen, ist bei einem Strangbauformteil der eingangs beschriebenen bekannten Konstruktion der die Absperrung durchführende Bauteil von einem Ventil gebildet, welches geöffnet wird, sobald der Extruder auf volle Ausstoßleistung gebracht ist. Bis dahin wird das vom Extruder geförderte Schmelzematerial über einen seitlichen Ausgang abgelassen, zumeist auf den Boden. Nachteilig hieran ist außer dem erwähnten Materialverlust der Umstand, dass sich an den Düsen bzw. den Löchern der Lochplatte ungleichmäßige Durchsätze einstellen, was ungleichmäßige Eigenschaften des erzeugten Granulates zur Folge hat.

Aus US 5,723,082 ist eine Granulieranlage bekannt, bei welcher zur Absperrung des Schmelzeflusses zu den Düsen ein Schieber dient. Dieser Schieber kann auch weggelassen werden, in welchem Fall die Zahnradpumpe die Funktion des Schiebers übernehmen muss. US 5,723,082 zeigt die Merkmale des Oberbegriffs des Anspruchs 1. Auch bei einer Konstruktion nach EP 0 894 594 A2 lässt sich durch Stillegung der Zannradpumpe der Schmelzezufluss zu den Düsen absperren, ebenso bei einer Konstruktion nach der DE 101 17 913 A1. Bei allen diesen bekannten Konstruktionen ist jedoch der Nachteil ungleichmäßiger Durchsätze an den Düsen bzw. den Löchern der Lochplatte nicht zufriedenstellend beseitigt.

Die Erfindung setzt sich zur Aufgabe, diese Nachteile zu vermeiden, und eine Konstruktion der eingangs geschilderten Art so zu verbessern, dass zumindest annähernd gleichmäßige Durchsätze an allen Düsen sichergestellt werden. Die Erfindung löst diese Aufgabe dadurch, dass mehrere Zahnradpumpen mit untereinander gleichem Förderverhalten von einer gemeinsamen Welle angetrieben sind, wobei von jeder Zahnradpumpe ein Kanal zu einer Strangdüse führt. Jede Zahnradpumpe ist daher mit der ihr zugeordneten Strangdüse durch einen einzigen Kanal verbunden, gemäß dem kennzeichnenden Teil des Anspruchs 1. Auf diese Weise wird sichergestellt, dass jede Zahnradpumpe den Schmelzestrom zur ihr zugeordneten Düse volumsmäßig dosiert. Da die Zahnradpumpen untereinander gleiches Förderverhalten aufweisen und von der gemeinsamen Welle angetrieben sind, bedeutet dies, dass jede von der jeweiligen Zahnradpumpe beschickte Strangdüse gleichmäßig mit Schmelzevolumen pro Zeiteinheit beschickt wird. Es stellen sich also gleichmäßige Verhältnisse für alle Löcher bzw. Strangdüsen ein, so dass eine gleichmäßige Qualität des erzeugten Granulates sichergestellt ist. Die Granulatabmessungen liegen dann in einem sehr engen Toleranzfeld.

Weiters wird der Vorteil gewahrt, dass jede Zahnradpumpe die ihr vom Extruder zugeführte Schmelze zusätzlich durchmischt, sodass eine weitere Vergleichmäßigung der Schmelzequalität erzielt wird.

Schließlich wird der Vorteil gewahrt, dass bei stillgesetzter Zahnradpumpe mittels des Extruders ein Vordruck am Eingang der Zahnradpumpe aufgebaut werden kann. Wird erst nach Erreichung dieses Vordruckes die Zahnradpumpe zum Umlauf angetrieben, so stellt sich sofort im jeweiligen zur Düse führenden Kanal der volle Massestrom ein, wodurch verhindert ist, dass diese Kanäle einfrieren.

Zur Absicherung des Vorteiles, dass an den Düsenausgängen keine unterschiedlichen Zustände auftreten, ist es vorteilhaft, wenn im Rahmen einer Weiterbildung der Erfindung jede Zahnradpumpe der betreffenden Strangdüse benachbart angeordnet ist, so dass die Länge der von den Zahnradpumpenausgängen zu den Düsen führenden Kanäle möglichst kurz ist. Im Gegensatz dazu liegen bei den bekannten Konstruktionen zumeist große Kanallängen zwischen dem Absperrventil bzw. der Zahnradpumpe und den Strangdüsen bzw. den Löchern der Lochplatte vor, was die erwähnten Schwierigkeiten zur Folge hat. Diese, erfindungsgemäß kurzgehaltene, Kanallänge lässt sich baulich einfach dadurch realisieren, dass die Strangdüsen an einem Düsenträger vorgesehen sind, der ein Gehäuse für die Zahnradpumpe bildet. Es ist hierbei nicht nötig, die Strangdüsen von gesonderten Bauteilen zu bilden, es kann natürlich der Düsenträger auch ein Lochplattenkopf sein, wobei die Strangdüsen von Löchern einer an ihm befestigten Lochplatte gebildet sind.

Außerdem bringt die Verwendung von Zahnradpumpen den Vorteil, dass die Möglichkeit besteht, gegebenenfalls den Volumenstrom durch Veränderung des Antriebes der Zahnradpumpen einstellen zu können, gegebenenfalls unterschiedlich für einzelne von mehreren Zahnradpumpen, so dass es überall zu einem gleichmäßigen Austritt von Schmelze aus den Löchern kommt.

Das erfindungsgemäße Verfahren zum Anfahren einer mit einem erfindungsgemäßen Strangformbauteil versehenen Granulieranlage, die von einem Extruder mit Schmelze beschickt wird, kennzeichnet sich dadurch, dass zunächst der Extruder angetrieben wird, bis am Eingang jeder Zahnradpumpe ein genügender Druck aufgebaut ist, und dass erst nach Erreichung dieses Druckes jede Zahnradpumpe aus ihrem bis dahin stillgesetzten Zustand angetrieben wird, wobei bei einer Unterwassergranulieranlage spätestens dann die Granuliermesser zur Umlaufbewegung angetrieben werden. Dieses Verfahren sichert die erwähnte Vermeidung eines Einfrierens von Schmelze in den zu den Strangdüsen bzw. Löchern der Lochplatte führenden Kanälen und gewährleistet die gleichmäßige Qualität des aus den einzelnen Strängen abgeschnittenen Granulates.

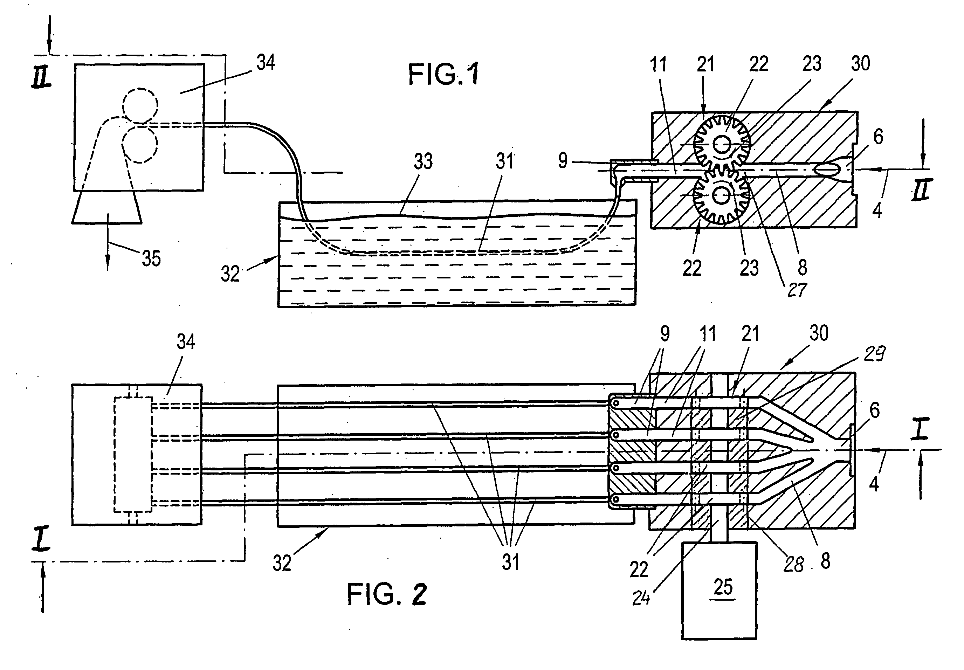

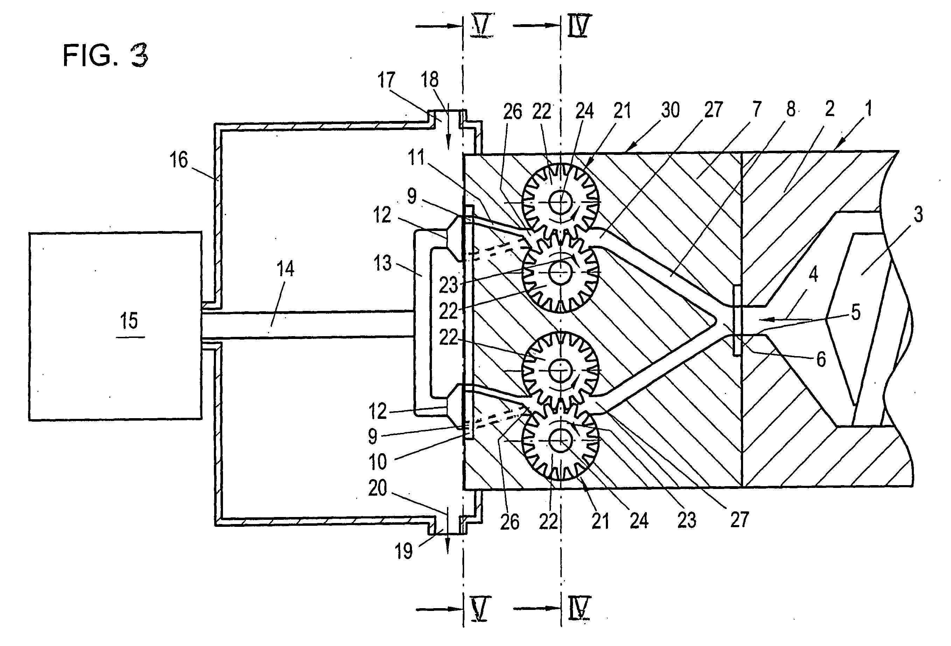

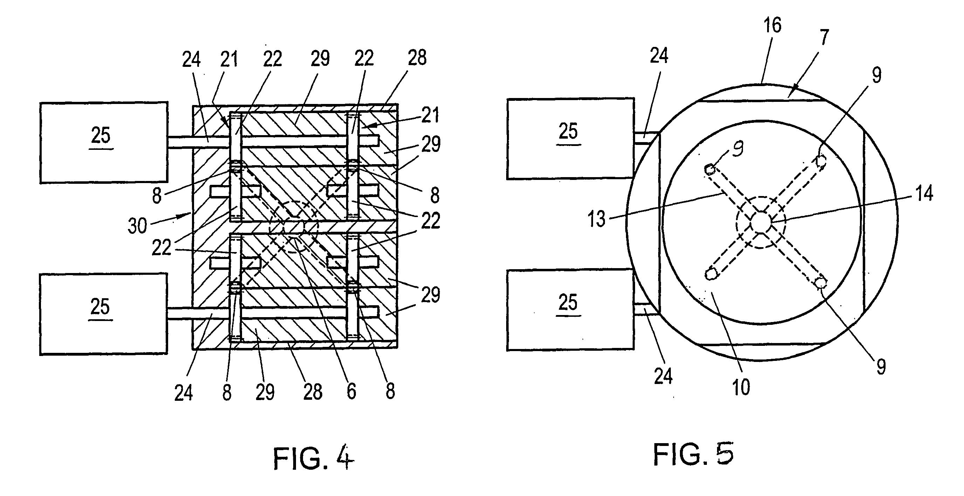

In der Zeichnung sind Ausführungsbeispiele eines erfindungsgemäßen Strangformbauteiles schematisch dargestellt. Die Fig. 1 und 2 zeigen die Anwendung der Erfindung auf eine Stranggranulieranlage, wobei Fig. 1 ein Schnitt nach der Linie I - I nach Fig. 2 ist und Fig. 2 ein Schnitt nach der Linie II - II der Fig. 1. Die Fig. 3 bis 5 zeigen die Anwendung der Erfindung auf eine Unterwassergranulieranlage, wobei Fig. 3 einen Längsschnitt durch die Anlage zeigt, während Fig. 4 ein Schnitt nach der Linie IV - IV der Fig. 3 ist und Fig. 5 ein Schnitt nach der Linie V - V der Fig. 3.

Die dargestellte Stranggranulieranlage nach den Fig. 1 und 2 wird von einem Extruder mit zu granulierender Masse beschickt, insbesondere ist diese Masse gebildet von thermoplastischem Kunststoffmaterial, welches zu Recyclingzwecken granuliert werden soll. Der Extruder hat ein Schneckengehäuse, in welchem eine zur Drehbewegung um ihre Achse angetriebene Schnecke gelagert ist. Der Extruder fördert das plastifizierte Material in Richtung des Pfeiles 4 in eine Ausgangsöffnung des Schneckengehäuses, an welche die Eingangsöffnung 6 eines Düsenträgers 30 dicht angeschlossen ist. Von dieser Eingangsöffnung 6 leiten mehrere Zuführkanäle 8 die Schmelze zu Kanälen 11, die zu den am Düsenträger 30 befestigten Strangdüsen 9 führen.

Zur Verbesserung der Anfahrverhältnisse und zur Sicherstellung gleichmäßiger Qualitätseigenschaften der abgeschlagenen Granulatteilchen führt jeder Zuführkanal 8 zu einer im Düsenträger 30 angeordneten Zahnradpumpe 21, die für jede bestimmte Drehzahl ein konstantes Förderverhalten für das ihr zugeführte Material aufweist. Das dargestellte Ausführungsbeispiel hat vier Zahnradpumpen 21 und somit vier Zuführkanäle 8 und vier Kanäle 11. Die beiden Zahnräder 22 jeder Zahnradpumpe 21 sind in Richtung der Pfeile 23 zur Drehbewegung angetrieben. Hierzu ist jeweils ein Zahnrad 22 jeder Zahnradpumpe 21 auf eine Welle 24 (Fig. 2) drehschlüssig aufgesetzt, die von einem Motor 25 angetrieben wird. Das andere Zahnrad 25 der jeweiligen Zahnradpumpe 21 wird über die Verzahnung vom angetriebenen Zahnrad zur Drehbewegung mitgenommen. Die Zahnradpumpen 21 sind von einer gemeinsamen Welle 24 angetrieben.

An den Ausgang 26 jeder Zahnradpumpe 21 ist, wie die Fig. 1 und 2 zeigen, ein einziger Kanal 11 angeschlossen. Dieser Kanal 11 führt vom Ausgang der betreffenden Zahnradpumpe 21 zu einer Strangdüse 9, die in den Düsenträger 30 eingesetzt ist, welcher ein Gehäuse für die Zahnradpumpe 21 bildet.

Die Austrittsöffnung jeder Strangdüse 9 ist nach unten gerichtet, so dass der aus ihr austretende extrudierte Schmelzestrang 31 in ein Strangkühlbad 32 fällt, das mit Wasser 33 gefüllt ist. Die verfestigten Stränge 31 werden aus diesem Strangkühlbad 32 wieder herausgehoben und einem nur schematisch dargestellten Granulator 34 zugeführt, aus welchem die abgeschnittenen Granulatteilchen nach unten in Richtung des Pfeiles 35 herausfallen.

Wie die Fig. 1 und 2 zeigen, sind die Zahnradpumpen 21 den Düsen 9 relativ nahe benachbart angeordnet. Dies hat den Vorteil, dass die von den Ausgängen der Zahnradpumpen 21 zu den Düsen 9 führenden Kanäle 11 kurz sind, was wesentlich dazu beiträgt, ein Einfrieren von Schmelze in diesen Kanälen 11 zu verhindern.

Wie Fig. 2 zeigt, sind die Zahnräder 22 jeder Zahnradpumpe 21 in Bohrungen 28 des Lochplattenkopfes 7 gelagert und durch Buchsen 29 in der jeweiligen axialen Lage in der Bohrung 28 gehalten. Die Wellen 24 durchsetzen diese Buchsen bzw. greifen in sie ein. Nach Lösung der Wellen von den Motoren 25 lassen sich die Zahnräder 22 samt den Buchsen 29 aus den Bohrungen 28 herausziehen bzw. in umgekehrter Richtung wieder in die Bohrungen 28 einsetzen.

Wie die Fig. 3 bis 5 zeigen, lässt sich die Erfindung selbstverständlich auch auf Unterwassergranulieranlagen anwenden. Wie Fig. 3 zeigt, wird eine solche Anlage von einem Extruder 1 mit der zu granulierenden Masse beschickt. Der Extruder 1 hat ein Schneckengehäuse 2, in welchem eine zur Drehbewegung um ihre Achse angetriebene Schnecke 3 gelagert ist. Der Extruder fördert das plastifizierte Material in Richtung des Pfeiles 4 in eine Ausgangsöffnung 5 des Schneckengehäuses 2, an welche die Eingangsöffnung 6 eines einen Düsenträger 30 bildenden Lochplattenkopfes 7 dicht angeschlossen ist. Von dieser Eingangsöffnung 6 leiten mehrere Zuführkanäle 8 die Schmelze zu Kanälen 11, die zu den die Strangdüsen 9 bildenden Löchern einer am Lochplattenkopf 7 befestigten Lochplatte 10 führen. Über diese Löcher streichen Granuliermesser 12, welche auf einem sternförmigen Messerträger 13 befestigt sind, der über eine Welle 14 von einem Motor 15 zur Drehbewegung angetrieben wird, so dass die Granuliermesser 12 die aus den Löchern austretenden Stränge in Granulatteilchen unterteilen. Die Granuliermesser 12, der Messerträger 13 und die Welle 14 liegen innerhalb eines Granuliergehäuses 16, in welches über eine Einlassöffnung 17 ständig Wasser in Richtung des Pfeiles 18 eingelassen wird, so dass die Granuliermesser 12 und die Lochplatte 10 ständig von Wasser bespült wird. Das Wasser läuft über eine Auslassöffnung 19 in Richtung des Pfeiles 20 aus dem Granuliergehäuse 16 wieder ab und nimmt dabei die von den Granuliermessern 12 abgeschlagenen Granulatteilchen mit.

Jeder Schmelzekanal 8 führt zu mehreren im Lochplattenkopf 7 angeordneten Zahnradpumpen 21, deren jede für jede bestimmte Drehzahl ein konstantes Förderverhalten für das ihr zugeführte Material aufweist. Das dargestellte Ausführungsbeispiel hat vier Zahnradpumpen 21, die in ähnlicher Weise angetrieben und auf Antriebswellen 24 montiert sind, wie dies im Zusammenhang mit dem Ausführungsbeispiel nach den Fig. 1 und 2 beschrieben wurde.

Vom Ausgang 26 jeder Zahnradpumpe 21 führt ein einziger Kanal 11 zu einer von einem Loch an der Lochplatte 10 gebildeten Strangdüse 9 (Fig. 5). Wie ersichtlich, sind diese Strangdüsen 9 über die Fläche der Lochplatte 10 verteilt angeordnet, wobei jedem dieser Löcher 9 eine Zahnradpumpe 21 zugeordnet ist. Beim dargestellten Ausführungsbeispiel sind an der Lochplatte 10 vier Strangdüsenlöcher 9 vorgesehen, praktische Ausführungsformen können ein bis zwölf Löcher 9 und demgemäß eine entsprechende Anzahl von Zahnradpumpen 21 aufweisen. Dadurch lässt sich über eine Variierung der Anzahl der Zahnradpumpen 21 und der Strangdüsen 9 der notwendige Materialfluss sicherstellen. Wie Fig. 3 zeigt, sind auch bei dieser Ausführungsform die Zahnradpumpen 21 den Löchern 9 der Lochplatte 10 relativ nahe benachbart angeordnet, sodass die von den Ausgängen 26 der Zahnradpumpen 21 zu den Löchern 9 der Lochplatte 10 führenden Kanäle 11 kurz sind, was den bereits erwähnten Vorteil der Vermeidung eines Einfrierens von Schmelze in den Kanälen 11 zur Folge hat.

Beim Anfahren einer solchen Anlage, sei es eine Unterwassergranulieranlage oder eine Stranggranulieranlage, wird so vorgegangen, dass die Zahnradpumpen 21 zunächst stillgesetzt werden und dadurch den Materialstrom zwischen dem Extruder 1 und den Düsen 9 völlig absperren. Sodann wird der Extruder 1 in Gang gesetzt und fördert das zu verarbeitende Kunststoffmaterial in die Eingangsöffnung 6 des Düsenträgers 30, welcher zugleich ein Gehäuse für die Zahnradpumpen 21 bildet. Dadurch baut sich am Eingang 27 jeder Zahnradpumpe 21 ein Druck im zugeführten Kunststoffmaterial auf. Sobald dieser Druck einen vorbestimmten Wert erreicht hat, was durch nicht dargestellte Druckfühler überwacht werden kann, werden alle Zahnradpumpen 21 schlagartig in Betrieb genommen und fördern somit das ihnen zugeführte Kunststoffmaterial mit konstantem Förderverhalten in die Kanäle 11 zu den Düsen 9.

Mit einer erfindungsgemäß ausgebildeten Granulieranlage lassen sich Durchsatzleistungen von 20 bis 60 kg pro Stunde und pro Loch der Lochplatte erzielen, was gegenüber bekannten Konstruktionen eine Erhöhung der maximalen Durchsatzleistung bedeutet.

## Patentansprüche

1. Strangformbauteil zum Anschluss eines Extruders (1) an eine Granulieranlage, vorzugsweise für thermoplastisches Kunststoffmaterial, mit zumindest einem mit dem Extruder (1) in Strömungsverbindung bringbaren Zuführkanal (8) für die Schmelze, der zu einer Zahnradpumpe (21) führt, mit welcher der Schmelzefluss zu einem Kanal (11), welcher zu einer Strangdüse (9) führt, beim Anfahren des Extruders (1) absperrbar ist, **dadurch gekennzeichnet, dass** mehrere Zahnradpumpen (21) mit untereinander gleichem Förderverhalten vorhanden sind, deren Antriebszahnräder (22) auf eine gemeinsame Antriebswelle (24) drehschlüssig aufgesetzt und von dieser gemeinsamen Antriebswelle (24) angetrieben sind, wobei von jeder Zahnradpumpe (21) ein einziger Kanal (11) zu einer Strangdüse (9) führt.

2. Strangformbauteil nach Anspruch 1, **dadurch gekennzeichnet, dass** jede Zahnradpumpe (21) der betreffenden Strangdüse (9) benachbart angeordnet ist, so dass die Länge der Kanäle (11) möglichst kurz ist.

3. Strangformbauteil nach Anspruch 1 oder 2, **dadurch gekennzeichnet, dass** die Strangdüsen (9) an einem Düsenträger (30) vorgesehen sind, der ein Gehäuse für die Zahnradpumpen (21) bildet.

4. Strangformbauteil nach Anspruch 3, **dadurch gekennzeichnet, dass** der Düsenträger (30) ein Lochplattenkopf ist und die Strangdüsen (9) von Löchern einer an ihm befestigten Lochplatte gebildet sind.

5. Strangformbauteil nach Anspruch 3 oder 4, **dadurch gekennzeichnet, dass** die Zahnräder (22) jeder Zahnradpumpe (21) in Bohrungen (28) des Düsenträgers (30) angeordnet und jeweils mittels zumindest einer Buchse (29) in ihrer axialen Lage in der betreffenden Bohrung (28) gehalten sind, wobei zumindest eine Buchse (29) von einer Antriebswelle (24) für die Antriebszahnräder (22) durchsetzt ist.

6. Strangformbauteil nach einem der Ansprüche 1 bis 5, **dadurch gekennzeichnet, dass** mehrere Zuführkanäle (8) die Schmelze von einer Eingangsöffnung (6) zu den Zahnradpumpen (21) leiten.

7. Verfahren zum Anfahren einer Granulieranlage, die von einem Extruder (1) über zumindest einen Zuführkanal (8) mit Schmelze beschickt wird, welcher Zuführkanal (8) zu einer Zahnradpumpe (21) führt, mit welcher der Schmelzefluss zu einem Kanal (11), welcher zu einer Strangdüse (9) führt, beim Anfahren des Extruders (1) absperrbar ist, **dadurch gekennzeichnet, dass** zunächst der Extruder (1) angetrieben wird, bis am Eingang (27) jeder von mehreren Zahnradpumpen (21) mit untereinander gleichem Förderverhalten ein genügender Druck aufgebaut ist, und dass erst nach Erreichung dieses Druckes die Antriebszahnräder (22) der Zahnradpumpen (21) über eine gemeinsame Antriebswelle (24) aus ihrem bis dahin stillgesetzten Zustand angetrieben werden.

8. Verfahren nach Anspruch 7, **dadurch gekennzeichnet, dass** bei einer Unterwassergranulieranlage die Granuliermesser (12) spätestens dann zur Umlaufbewegung angetrieben werden, wenn die Antriebszahnräder (22) der Zahnradpumpen (21) aus ihrem bis dahin stillgesetzten Zustand angetrieben werden.

## Claims

1. Strand shaping part for connecting an extruder (1) to a granulating installation, preferably for a thermoplastic synthetic material, comprising at least one supply channel (8) for the melt, which can be brought into a fluid connection with said extruder (1), and which leads to a gear pump (21) by which the flux of melt to a channel, that leads to a strand nozzle (9), can be blocked when starting said extruder (1), **characterised in that** a plurality of gear pumps (21) having a mutually equal conveying behaviour are provided, the drive gear wheels (22) of which being set onto a drive shaft (24) to be rotationally connected and are driven by this drive shaft (24) in common, a single channel (11) leading from every gear pump (21) to said strand nozzle (9).

2. Strand shaping part according to claim 1, **characterised in that** each gear pump (21) is situated adjacent to the respective strand nozzle (9) so that the length of the channels (11) is as short as possible.

3. Strand shaping part according to claim 1 or 2, **characterised in that** the strand nozzles (9) are provided on a nozzle carrier (30), which forms a housing for said gear pumps (21).

4. Strand shaping part according to claim 3, **characterised in that** said nozzle carrier (30) is an perforated plate head, and the strand nozzles (9) are formed by the holes of a perforated plate fixed on it.

5. Strand shaping part according to claim 3 or 4, **characterised in that** the gear wheels (22) of each gear pump (21) are located in borings (28) of the nozzle carrier (30) and are held each in their axial position within the boring (28) by means of at least one sleeve (29), at least one sleeve (29) being traversed by a drive shaft (24) for the drive gear wheels (22).

6. Strand shaping part according to any of claims 1 to 5, **characterised in that** a plurality of supply channels (8) guide the melt from an input opening (6) to said gear pumps (21).

7. Method for starting a granulating installation supplied with melt by an extruder (1) via at least one supply channel (8), said supply channel (8) leading to a gear pump (21) by means of which the melt flux to a channel (11), which leads to a strand nozzle (9), may be locked when starting the extruder (1), **characterised in that** first the extruder (1) is driven up to the moment when sufficient pressure has been built up at the entrance (27) of each one of a plurality of gear pumps (21) having a mutually equal conveying behaviour, and that the drive gear wheels (22) of the gear pumps (21) are driven by a drive shaft (24) in common from their up to then blocked condition only after reaching this pressure.

8. Method according to claim 7, **characterised in that** in the case of an underwater granulating installation, the granulating knives (12) are driven to rotate at latest when the drive gear wheels (22) of the gear pumps (21) are driven from their up to then blocked condition.

## Revendications

1. Unité de formation de boudins pour le raccord d'une boudineuse (1) à une installation à granuler, de préférence pour une matière synthétique thermoplastique, comprenant au moins un canal d'alimentation (8) pour la fonte susceptible à être mis en connexion d'écoulement avec la boudineuse, ledit canal conduisant à une pompe à engrenages (21), avec laquelle le flux de fonte vers un canal (11), qui conduit à une filière de boudin (9), peut être serré lors du démarrage de la boudineuse (1), **caractérisée en ce, qu'**il y a plusieurs pompes à engrenage (21) avec un comportement de refoulement mutuellement égal, dont les roues dentées motrices (22) sont placées à un arbre commun (24) en rotation connectée et sont entraînées par cet arbre d'entraînement (24) commun, un seul canal (11) conduit de chaque pompe à engrenage (21) vers une filière de boudin (9).

2. Unité de formation de boudins selon la revendication 1, **caractérisée en ce, que** chaque pompe à engrenage (21) est situé d'une façon adjacente à la filière de boudin respective (9), de manière que la longueur des canaux (11) est si courte que possible.

3. Unité de formation de boudins selon la revendication 1 ou 2, **caractérisée en ce, que** les filières de boudin (9) sont prévues à un porteur de filière (30), qui forme un boîtier pour les pompes à engrenage (21).

4. Unité de formation de boudins selon la revendication 3, **caractérisée en ce, que** le porteur de filière (30) est une tête à étampe universelle, et les filières de boudin (9) sont formées par les trous d'une étampe universelle attachée à celle-ci.

5. Unité de formation de boudins selon la revendication 3 ou 4, **caractérisée en ce, que** les roues dentées (22) de chaque pompe à engrenage (21) sont disposées dans des alésages (28) du porteur de filière (30) et sont tenues dans sa position axiale dans l'alésage respectif (28) au moyen d'une douille (29), au moins une douille (29) étant traversée par un arbre d'entraînement (24) pour les roues dentées d'entraînement (22).

6. Unité de formation de boudins selon une quelconque des revendications 1 à 5, **caractérisée en ce, que** plusieurs canaux d'alimentation (8) conduisent la fonte à partir d'une ouverture d'entrée (6) vers les pompes à engrenage (21).

7. Procédé de démarrage d'une installation à granuler alimentée avec une fonte par une boudineuse (1) à travers au moins un canal d'alimentation (8), ledit canal d'alimentation (8) conduisant à une pompe à engrenage (21), avec laquelle le flux de fonte vers un canal (11), qui conduit vers une filière de boudin (9) peut être serré lors du démarrage de la boudineuse (1), **caractérisé en ce, que** la boudineuse (1) est d'abord entraînée jusqu'à ce qu'une pression suffisante se soit développée à l'entrée (27) de chacune de plusieurs pompes à engrenage (21) avec un comportement de refoulement mutuellement égal, et que c'est seulement après l'arrivée de cette pression, que les roues dentées d'entraînement (22) des pompes à engrenage (21) sont entraînées à partir de son état arrêté jusque là par un arbre d'entraînement (24) commun.

8. Procédé selon la revendication 7, **caractérisé en ce, qu'**en cas d'une installation à granuler sous l'eau, les couteaux à granuler (12) sont entraînés au plus tard à une rotation, quand les roues dentées d'entraînement (22) des pompes à engrenage (21) sont entraînées à partir de son état arrêté jusque là.
